# EUROPÄISCHE PATENTSCHRIFT

(11) **EP 2 302 777 B1**
(45) Veröffentlichungstag und Bekanntmachung des Hinweises auf die Patenterteilung: **06.09.2017**
(21) Anmeldenummer: 10006857.6
(22) Anmeldetag: 02.07.2010
(51) Int. Cl.: H02M 5/257, H02M 5/27

(54) **Elektrische Schaltung insbesondere zur Erzeugung von elektrischer Energie**
Electrical circuit, particularly for generating electrical energy
Circuit électrique destinée à la production d'énergie électrique

(30) Priorität: 23.09.2009 DE 102009042690
(43) Veröffentlichungstag der Anmeldung: 30.03.2011
(73) Patentinhaber: GE Energy Power Conversion Technology Limited, Rugby Warwickshire CV21 1BU (GB)
(72) Erfinder: Möhlenkamp, Georg, Dr., 14979 Großbeeren (DE); Wagnitz, Reinhard, 13503 Berlin (DE)
(74) Vertreter: Serjeants LLP

(56) Entgegenhaltungen:
- WO-A1-2006/103159
- US-A- 3 999 112

## Beschreibung

Die Erfindung betrifft eine elektrische Schaltung zur Erzeugung von elektrischer Energie nach dem Oberbegriff des Anspruchs 1.

Eine elektrische Schaltung zur Erzeugung von elektrischer Energie ist aus der US 5,694,026 bekannt. Dort ist eine Turbine mechanisch direkt mit einem mehrphasigen Generator gekoppelt, der seinerseits über einen Umrichter und einen Transformator mit einem elektrischen Energieversorgungsnetz verbunden ist. Zwischen der Turbine und dem Generator ist kein mechanisches Getriebe vorhanden. Im generatorischen Betrieb wird die Turbine mit Brennstoff versorgt, so dass der Generator von der Turbine angetrieben wird und elektrische Energie erzeugt. Diese Energie wird über den Umrichter und den Transformator in das Energieversorgungsnetz eingespeist.

Beispielsweise aus der DE 100 51 222 A1 ist ein Matrixkonverter bekannt, der insbesondere bei der Erzeugung elektrischer Energie eingesetzt werden kann. Mit Hilfe eines derartigen Matrixkonverters muss der Generator nicht zwingend mit der Frequenz des angeschlossenen Energieversorgungsnetzes betrieben werden, sondern kann auch mit einer höheren Frequenz betrieben werden. Ein Nachteil dieses Matrixkonverters besteht darin, dass die vorhandenen Thyristoren nur kurze Stromführungsdauern aufweisen, was zu Stromspitzen und damit hohen Belastungen führt. Aus dem US-Patent 3,999,112 ist ein mehrphasiger Frequenzumrichter nach dem Oberbegriff des Anspruchs 1 bekannt, an dessen Ausgang Saugdrosseln angeschlossen sind.

Aus der WO 2006/103159 A1 ist ein Generator mit hoher Phasenordnung bekannt, der über einen Matrix-Konverter an einen Transformator angeschlossen ist. Aufgabe der Erfindung ist es, eine elektrische Schaltung zu schaffen, mit der geringere Belastungen für die Thyristoren erreichbar sind.

Diese Aufgabe wird durch eine elektrische Schaltung nach dem Anspruch 1 gelöst.

Erfindungsgemäß sind ein n-phasiger Generator, ein Umrichter und ein Transformator vorhanden, an den eine p-phasige Last anschließbar ist. Der Umrichter weist m Teil-Umrichter auf, jeder der Teil-Umrichter weist p Blöcke auf, und jeder der Blöcke weist n/m Schalteinrichtungen auf. Die Schalteinrichtungen der einzelnen Blöcke sind symmetrisch mit dem Generator verbunden.

Durch die symmetrische Verbindung der einzelnen Blöcke mit dem Generator werden Stromspitzen und damit hohe Belastungen für die Schalteinrichtungen vermieden. So wird der Strom durch die einzelnen Schalteinrichtungen vermindert, und zwar insbesondere um einen Faktor, der der Anzahl m der Teil-Umrichter entspricht. Weiterhin wird die Stromführungsdauer der einzelnen Thyristoren der Schalteinrichtungen verlängert, und zwar wiederum um den Faktor m.

Bei einer besonders vorteilhaften Ausbildung der Erfindung sind die Schalteinrichtungen jedes Blocks mit jeder p-ten Phase des Generators verbunden, wobei vorzugsweise die Schalteinrichtungen der aufeinanderfolgenden Blöcke mit um eine Phase unterschiedlichen Phasen des Generators verbunden sind. Auf diese Weise wird eine Symmetrie erreicht, bei der eine besonders weitreichende Verminderung der Belastung der Schalteinrichtungen erreichbar ist.

Bei einer ersten besonders vorteilhaften Ausbildung der Erfindung sind die Wicklungen des Generators zueinander in Serie geschaltet und es ist ein Transformator vorhanden, der eine Primärwicklung und m Sekundärwicklungen aufweist. Vorzugsweise sind dabei die Schalteinrichtungen jedes Blocks ausgangsseitig zusammengeschaltet, wobei die zu den einzelnen Teil-Umrichtern zugehörigen Blöcke mit derselben Sekundärwicklung verbunden sind. Damit wird in einfacher Weise eine galvanische Trennung der Teil-Umrichter zueinander erreicht.

Bei einer zweiten besonders vorteilhaften Ausbildung der Erfindung bilden die Wicklungen des Generators m Serienschaltungen, die zueinander parallel geschaltet sind, und der Transformator weist eine Primärwicklung und eine einzige Sekundärwicklung auf. Vorzugsweise sind die Schalteinrichtungen jedes Blocks ausgangsseitig zusammengeschaltet, wobei alle Blöcke der Teil-Umrichter mit der Sekundärwicklung verbunden sind. Auch auf diese Weise wird eine einfache galvanische Trennung der Teil-Umrichter erreicht.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

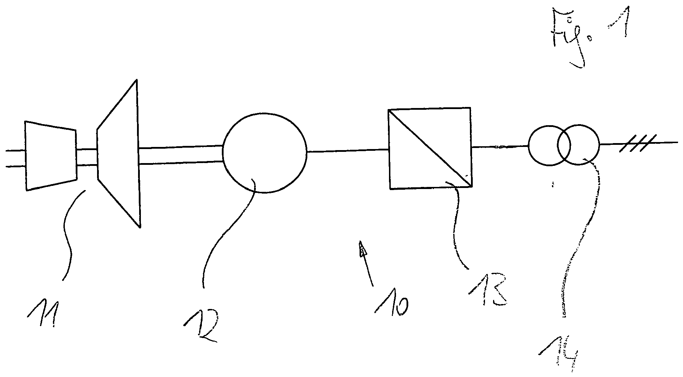

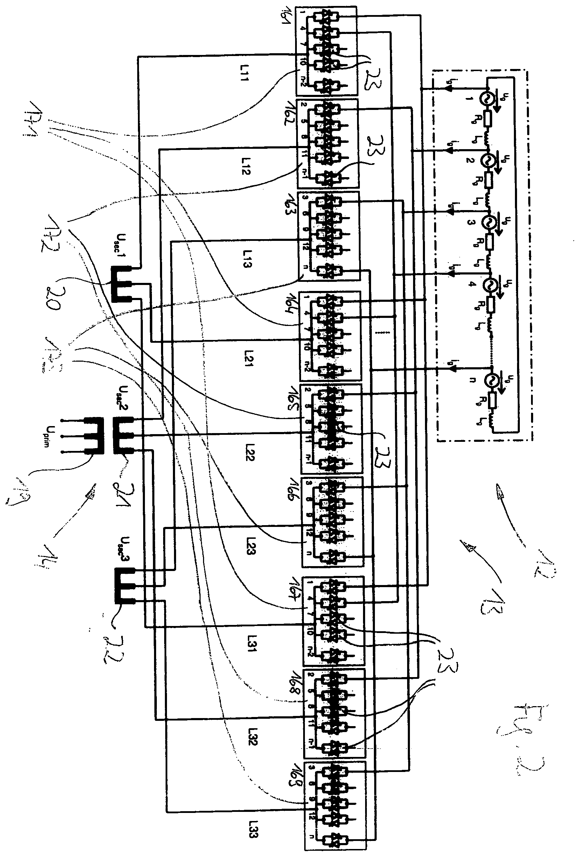

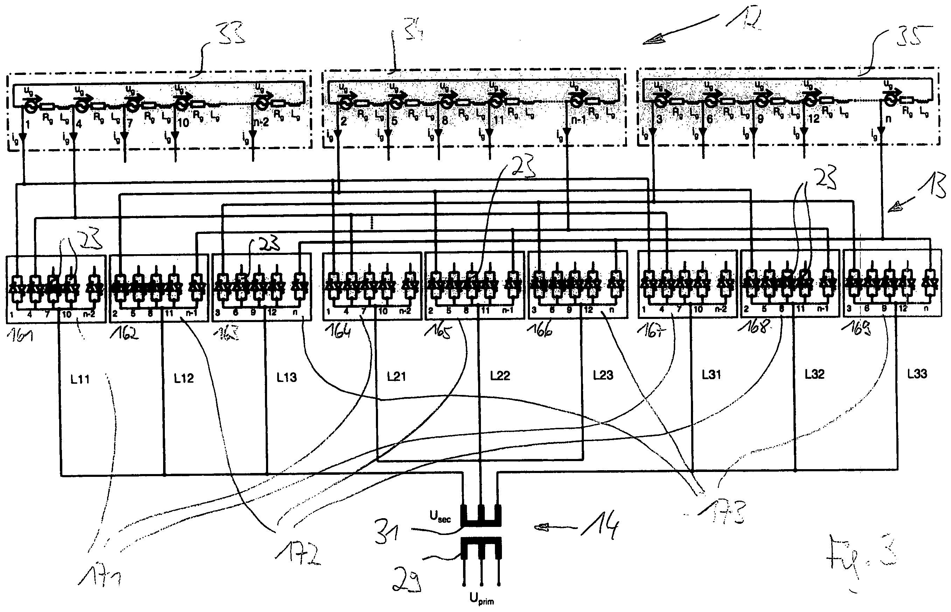

Figur 1 zeigt ein schematisches Blockschaltbild eines Ausführungsbeispiels eines erfindungsgemäßen Systems zur Erzeugung von elektrischer Energie, Figur 2 zeigt ein Schaltbild eines ersten Ausführungsbeispiels einer erfindungsgemäßen elektrischen Schaltung eines Generators, eines Umrichters und eines Transformators zur Verwendung in dem System der Figur 1, und Figur 3 zeigt ein Schaltbild eines zweiten Ausführungsbeispiels einer erfindungsgemäßen elektrischen Schaltung eines Generators, eines Umrichters und eines Transformators zur Verwendung in dem System der Figur 1.

Das in der Figur 1 gezeigte System 10 zur Erzeugung elektrischer Energie weist eine Turbine 11 auf, die mechanisch mit einem elektrischen Generator 12 direkt gekoppelt ist. Ein zwischengeschaltetes Getriebe oder dergleichen ist nicht vorhanden. Der Generator 12 ist mit einem elektrischen Umrichter 13 verbunden, an den ein elektrischer Transformator 14 angeschlossen ist. Der Transformator 14 ist weiterhin mit einer nichtdargestellten elektrischen Last, beispielsweise mit einem elektrischen Energieversorgungsnetz verbunden. Im vorliegenden Ausführungsbeispiel handelt es sich dabei um eine dreiphasige Last bzw. ein dreiphasiges Energieversorgungsnetz.

Im Betrieb wird die Turbine 11 beispielsweise mit Hilfe von Brennstoffen in Rotation versetzt. Über die direkte mechanische Kopplung wird auch der Generator 12 in eine Drehbewegung versetzt und erzeugt damit in einem generatorischen Betrieb eine Ausgangsspannung mit einer drehzahlabhängigen Frequenz. Mit Hilfe des Umrichters 13 wird diese veränderliche Frequenz der Ausgangsspannung in eine im wesentlichen feste Frequenz umgewandelt, die beispielsweise der Frequenz des Energieversorgungsnetzes entspricht. Danach wird die Ausgangsspannung noch mittels des Transformators 14 auf eine vorgegebene Spannung beispielsweise des Energieversorgungsnetzes angehoben. Insgesamt wird auf diese Weise von dem erläuterten System 10 elektrische Energie erzeugt und beispielsweise in das Energieversorgungsnetz eingespeist.

In der Figur 2 sind der Generator 12, der Umrichter 13 und der Transformator 14 eines ersten Ausführungsbeispiels sowie deren elektrische Zusammenschaltung im Detail dargestellt.

Bei dem Generator 12 handelt es sich um einen Synchrongenerator mit einer Gesamtanzahl von n Wicklungen. Der Generator 12 wird nachfolgend auch als n-phasig bezeichnet. Insbesondere handelt es sich um einen beispielsweise 27-phasigen Synchrongenerator mit einer polygonalen Ausbildung der Wicklungen.

Ein Ersatzschaltbild des Generators 12 ist in der Figur 2 dargestellt. Wie aus der Figur 2 hervorgeht, weist jede der n Wicklungen einen Leitungswiderstand Rg und eine Wicklungsinduktivität Lg auf. Im generatorischen Betrieb des Generators 12 wird in jeder der n Wicklungen eine Spannung Ug induziert, die zu einem Strom ig zu dem Umrichter 13 führt. Die Leitungswiderstände Rg, die Wicklungsinduktivitäten Lg, die Spannungen Ug und die Ströme ig sind mit Hilfe der Ziffern "1" bis "n" unterscheidbar, was in der Figur 2 dadurch angedeutet ist, dass den zusammengehörigen Größen jeweils die entsprechende Ziffer zugeordnet ist.

In dem Ersatzschaltbild der Figur 2 bilden die induzierte Spannung Ug, der Leitungswiderstand Rg und die Leitungsinduktivität Lg jeder der n Wicklungen eine Serienschaltung und diese Serienschaltungen der n Wicklungen sind ebenfalls in Serie geschaltet. Die Ströme ig zweigen von den einzelnen Wicklungen ab und sind insoweit zueinander parallel geschaltet.

Bei dem Umrichter 13 handelt es sich um einen Matrixumrichter, der aus b Blöcken zusammengesetzt ist. Wie noch erläutert werden wird, bilden diese b Blöcke dabei m Teil-Umrichter. Zwischen diesen Anzahlen gilt der Zusammenhang: b = m x p. Die Anzahlen b, m und p müssen dabei ganzzahlige Werte aufweisen. Weiterhin muss die Anzahl m der Teil-Umrichter ein ganzzahliger Teiler der Gesamtanzahl n der Wicklungen des Generators 12 sein.

Im vorliegenden Ausführungsbeispiel sind drei Teil-Umrichter vorhanden. Für den erläuterten 27-phasigen Generator 12 und die dreiphasige Last ergeben sich damit neun Blöcke. Diese neun Blöcke sind in der Figur 2 mit den Bezugsziffern 161, 162, 163, ..., 169 durchnummeriert.

Der erste Teil-Umrichter setzt sich aus den Blöcken 161, 164, 167 zusammen und ist in der Figur 2 mit der Bezugsziffer 171 gekennzeichnet. Der zweite Teil-Umrichter setzt sich aus den Blöcken 162, 165, 168 zusammen und ist mit der Bezugsziffer 172 gekennzeichnet. Der dritte Teil-Umrichter setzt sich aus den Blöcken 163, 166, 169 zusammen und ist mit der Bezugsziffer 173 gekennzeichnet.

Die Anzahl von Blöcken pro Teil-Umrichter entspricht der Anzahl der Phasen der Last bzw. des Energieversorgungsnetzes, an das der Umrichter 13 über den Transformator 14 angeschlossen ist. Wie bereits erwähnt wurde, handelt es sich im vorliegenden Ausführungsbeispiel um eine dreiphasige Last. Jeder der Teil-Umrichter 171, 172, 173 setzt sich deshalb im vorliegenden Ausführungsbeispiel aus drei Blöcken zusammen. Dies ergibt die bereits erwähnte Gesamtanzahl von neun Blöcken.

Theoretisch könnten auch allgemein p Phasen vorhanden sein, was dann bei der Anzahl b der Blöcke, wie auch bei der Anzahl m der Teil-Umrichter und der Anzahl n der Windungen des Generators 12 zu berücksichtigen wäre.

Jeder der Blöcke 161, ..., 169 weist n/m Schalteinrichtungen 23 auf. Bei dem beispielhaft vorhandenen 27-phasigen Generator 12 ist jeder der Blöcke 161, ..., 169 somit mit neun Schalteinrichtungen 23 versehen. Jede der Schalteinrichtungen 23 ist schließlich aus zwei gegensinnig parallel geschalteten Thyristoren aufgebaut. Insbesondere im Hinblick auf eine höhere Sperrspannung kann auch eine Reihenschaltung von zwei gegensinnig parallel geschalteten Thyristoren vorgesehen sein.

Die Schalteinrichtungen 23 der einzelnen Blöcke 161, ..., 169 der Teil-Umrichter 171, 172, 173 sind symmetrisch mit dem Generator 12 verbunden. Liegt, wie im vorliegenden Ausführungsbeispiel angenommen, ein 27-phasiger Generator 12 und eine dreiphasige Last bzw. ein dreiphasiges Energieversorgungsnetz vor, so hat dies zur Folge, dass die Schalteinrichtungen 23 der einzelnen Blöcke 161, ..., 169 nicht mit aufeinanderfolgenden Phasen des Generators 12 verbunden sind, sondern dass innerhalb eines Blockes immer nur eine Verbindung zu jeder dritten Phase existiert.

Im allgemeinen Fall mit p Phasen der Last bzw. des Energieversorgungsnetzes besteht somit eine Verbindung von den Schalteinrichtungen 23 eines Blocks zu jeder p-ten Phase des Generators 12.

Weiterhin unterscheiden sich die Verbindungen der Schalteinrichtungen 23 zu den einzelnen Blöcken dadurch, dass die Schalteinrichtungen 23 der aufeinanderfolgenden Blöcke 161, ..., 169 immer mit um eine Phase unterschiedlichen Phasen des Generators 12 verbunden sind.

In der Figur 2 sind die Schalteinrichtungen 23 des Blocks 161 des Teil-Umrichters 171 somit mit den Phasen 1, 4, 7, 10, ..., n-2 des Generators 12 verbunden. Entsprechend sind die Schalteinrichtungen 23 des Blocks 162 des Teil-Umrichters 172 mit den Phasen 2, 5, 8, 11, ..., n-1 des Generators 12 und die Schalteinrichtungen 23 des Blocks 163 des Teil-Umrichters 173 mit den Phasen 3, 6, 9, 12, ..., n des Generators 12 verbunden. In entsprechender Weise sind auch die Blöcke 164, 165, 166, 167, 168, 169 mit den jeweiligen Phasen des Generators 12 verbunden.

Die Schalteinrichtungen 23 eines einzelnen Blocks 161, ..., 169 sind zueinander parallel geschaltet. Eingangsseitig sind die Schalteinrichtungen 23, wie erläutert, mit den Phasen des Generators 12 verbunden.

Ausgangsseitig sind die Schalteinrichtungen 23 eines einzelnen Blocks zusammengeschaltet. Bei den insgesamt neun Blöcken der drei Teil-Umrichter ergeben sich damit neun Ausgangsleitungen, die in der Figur 2 als L11, L12, L13, L21, L22, L23, L31, L32, L33 bezeichnet sind. Im vorliegenden Ausführungsbeispiel der Figur 2 kennzeichnet die zweite Ziffer die Zugehörigkeit zu einem bestimmten Teil-Umrichter und die erste Ziffer kennzeichnet die Zugehörigkeit zu einem bestimmten Block innerhalb des jeweiligen Teil-Umrichters.

Der Transformator 14 weist eine Primärwicklung 19 und mehrere Sekundärwicklungen auf. Allgemein entspricht die Anzahl der Sekundärwicklungen der Anzahl m der Teil-Umrichter. Im vorliegenden Ausführungsbeispiel mit drei Teil-Umrichtern besitzt der Transformator 14 somit drei Sekundärwicklungen 20, 21, 22. Die Primärwicklung 19 und die Sekundärwicklungen 20, 21, 22 weisen im vorliegenden Ausführungsbeispiel jeweils drei Anzapfungen auf. Allgemein entspricht die Anzahl der Anzapfungen der Anzahl p der Phasen der Last bzw. des Energieversorgungsnetzes. Die Primärwicklung 19 und die Sekundärwicklungen 20, 21, 22 sind magnetisch miteinander gekoppelt.

Die drei Blöcke jedes Teil-Umrichters 171, 172, 173 sind mit den drei Anzapfungen derselben Sekundärwicklung verbunden. Die Verbindung der Blöcke der Teil-Umrichter mit den Sekundärwicklungen ist insoweit symmetrisch.

Im vorliegenden Ausführungsbeispiel der Figur 2 sind die zu dem ersten Teil-Umrichter 171 zugehörigen Ausgangsleitungen L11, L21, L31 mit den Anzapfungen der Sekundärwicklung 20, die zu dem zweiten Teil-Umrichter 172 zugehörigen Ausgangsleitungen L12, L22, L32 mit den Anzapfungen der Sekundärwicklung 21 und die zu dem dritten Teil-Umrichter 173 zugehörigen Ausgangsleitungen L13, L23, L33 mit den Anzapfungen der Sekundärwicklung 22 verbunden.

An den Sekundärwicklungen 20, 21, 22 sind Spannungen U_{sec1}, U_{sec2}, U_{sec3} vorhanden. An der Primärwicklung 19 liegt eine Spannung Uₚᵣᵢₘ an, die an die beispielhaft vorhandene Last abgegeben bzw. in das beispielhaft vorgesehene dreiphasige Energieversorgungsnetz eingespeist wird. Allgemein kann an die Primärwicklung 19 eine p-phasige Last bzw. ein p-phasiges Energieversorgungsnetz angeschlossen werden.

Die Amplitude der Spannung Uₚᵣᵢₘ kann durch das Verhältnis der Primärwicklung 19 zu den Sekundärwicklungen 20, 21, 22 eingestellt werden und die Frequenz der Spannung Uₚᵣᵢₘ kann durch eine entsprechende Ansteuerung der einzelnen Thyristoren der Schalteinrichtungen 23 eingestellt werden.

Mit Hilfe der drei Sekundärwicklungen 20, 21, 22 wird eine galvanische Trennung der drei Teil-Umrichter 171, 172, 173 erreicht.

In der Figur 3 sind der Generator 12, der Umrichter 13 und der Transformator 14 sowie deren elektrische Zusammenschaltung im Detail eines zweiten Ausführungsbeispiels dargestellt. Der Aufbau des Umrichters 13 der Figur 3, insbesondere der Aufbau aus neun Blöcken 161, ..., 169 in drei Teil-Umrichtern 171, 172, 173 und deren elektrische Beschaltung mit den Schalteinrichtungen 23, entspricht der Figur 2. Gleiche Bauteile sind daher mit gleichen Bezugszeichen versehen. Im Hinblick auf diese übereinstimmenden Bauteile wird auf die Erläuterungen der Figur 2 verwiesen.

Die elektrische Zusammenschaltung zwischen dem Umrichter 13 und dem Generator 12 sowie zwischen dem Umrichter 13 und dem Transformator 14 der Figur 3 unterscheidet sich jedoch von der Figur 2. Ebenfalls unterscheidet sich der Generator 12 und der Transformator 14 der Figur 3 von der Figur 2. Diese Unterschiede werden nachfolgend erläutert.

Der Generator 12 der Figur 3 unterscheidet sich dadurch von der Figur 2, dass nicht alle n Phasen, wie in der Figur 2 dargestellt, in Serie zueinander geschaltet sind, sondern dass bei der Figur 3 immer nur n/m Phasen eine Serienschaltung bilden und die entstehenden m Serienschaltungen zueinander parallel geschaltet sind. Die Anzahl der Serienschaltungen entspricht somit der Anzahl der Teil-Umrichter. Beim vorliegenden Ausführungsbeispiel, bei dem ein 27-phasiger Generator 12 und drei Teil-Umrichter vorgesehen sind, sind daher bei dem Generator 12 jeweils neun Phasen in Reihe und dann drei derartige Serienschaltungen zueinander parallel geschaltet. In der Figur 3 sind die vorgenannten drei Serienschaltungen mit den Bezugsziffern 33, 34, 35 gekennzeichnet.

Jede der Serienschaltungen 33, 34, 35 des Generators 12 enthält nicht direkt aufeinanderfolgende Wicklungen, sondern immer nur jede p-te Wicklung. Im vorliegenden Ausführungsbeispiel einer dreiphasigen Last bzw. eines dreiphasigen Energieversorgungsnetzes enthalten die einzelnen Serienschaltungen 33, 34, 35 also immer jede dritte Wicklung. Gemäß der Figur 3 enthält die Serienschaltung 33 die Wicklungen 1, 4, 7, ..., n-2, die Serienschaltung 34 die Wicklungen 2, 5, 8, ..., n-1, und die Serienschaltung 35 die Wicklungen 3, 6, 9, ..., n.

Die Schalteinrichtungen 23 der einzelnen Blöcke 161, ..., 169 der Teil-Umrichter 171, 172, 173 sind symmetrisch mit den Serienschaltungen 33, 34, 35 des Generators 12 verbunden. Liegt, wie im vorliegenden Ausführungsbeispiel angenommen, ein 27-phasiger Generator 12 und eine dreiphasige Last vor, so hat dies zur Folge, dass die Schalteinrichtungen 23 der einzelnen Blöcke 161, ..., 169 nicht mit aufeinanderfolgenden Phasen der Serienschaltungen 33, 34, 35 verbunden sind, sondern dass innerhalb eines Blockes immer nur eine Verbindung zu jeder dritten Wicklung existiert.

Im allgemeinen Fall mit p Phasen der Last bzw. des Energieversorgungsnetzes besteht somit eine Verbindung von den Schalteinrichtungen 23 eines Blocks zu jeder p-ten Phase der Serienschaltungen des Generators 12.

Weiterhin unterscheiden sich die Verbindungen der Schalteinrichtungen 23 zu den einzelnen Blöcken dadurch, dass die Schalteinrichtungen 23 der aufeinanderfolgenden Blöcke 161, ..., 169 immer mit um eine Phase unterschiedlichen Phasen des Generators 12 verbunden sind.

In der Figur 3 sind die Schalteinrichtungen 23 des Blocks 161 des Teil-Umrichters 171 somit mit den Phasen 1, 4, 7, 10, ..., n-2 der Serienschaltung 33 des Generators 12 verbunden. Entsprechend sind die Schalteinrichtungen 23 des Blocks 162 des Teil-Umrichters 172 mit den Phasen 2, 5, 8, 11, ..., n-1 der Serienschaltung 34 des Generators 12 und die Schalteinrichtungen 23 des Blocks 163 des Teil-Umrichters 173 mit den Phasen 3, 6, 9, 12, ..., n der Serienschaltung 35 des Generators 12 verbunden. In entsprechender Weise sind auch die Blöcke 164, 165, 166, 167, 168, 169 mit den Phasen der jeweiligen Serienschaltungen 33, 34, 35 des Generators 12 verbunden.

Mit Hilfe der drei Serienschaltungen 33, 34, 35 des Generators 12 wird eine galvanische Trennung der drei Teil-Umrichter 171, 172, 173 erreicht.

Der Transformator 14 weist eine Primärwicklung 29 und eine einzige Sekundärwicklung 31 auf. Im vorliegenden Ausführungsbeispiel weisen die Primärwicklung 29 und die Sekundärwicklung 31 jeweils drei Anzapfungen auf, wobei diese Anzahl der Anzapfungen allgemein der Anzahl der Phasen der angeschlossenen Last entspricht. An der Sekundärwicklung 31 liegt eine Spannung U_{sec} an und an der Primärwicklung 29 ist eine Spannung Uₚᵣᵢₘ abgreifbar. Die Primärwicklung 29 und die Sekundärwicklung 31 sind magnetisch miteinander gekoppelt.

Jeweils drei aufeinanderfolgende Blöcke der neun Blöcke 161, ..., 169 sind zusammengeschaltet und dann mit einer der drei Anzapfungen der Sekundärwicklung 31 verbunden. Dies bedeutet, dass immer einander entsprechende Blöcke unterschiedlicher Teil-Umrichter mit derselben Anzapfung der Sekundärwicklung 31 verbunden sind. Die Verbindung der Blöcke der Teil-Umrichter mit der Sekundärwicklung ist insoweit symmetrisch.

Im vorliegenden Ausführungsbeispiel der Figur 3 sind die zu den drei Teil-Umrichtern 171, 172, 173 zugehörigen Ausgangsleitungen L11, L12, L13 mit der ersten Anzapfung der Sekundärwicklung 31, die zu den drei Teil-Umrichtern 171, 172, 173 zugehörigen Ausgangsleitungen L21, L22, L23 mit der zweiten Anzapfung der Sekundärwicklung 31 und die zu den drei Teil-Umrichtern 171, 172, 173 zugehörigen Ausgangsleitungen L31, L32, L33 mit der dritten Anzapfung der Sekundärwicklung 31 verbunden.

Wie bereits erwähnt, liegt an der Primärwicklung 29 die Spannung Uₚᵣᵢₘ an, die an die beispielhaft vorhandene Last abgegeben bzw. in das beispielhaft vorgesehene dreiphasige Energieversorgungsnetz eingespeist wird. Allgemein kann an die Primärwicklung 29 eine p-phasige Last angeschlossen werden.

Die Amplitude der Spannung Uₚᵣᵢₘ kann durch das Verhältnis der Primärwicklung 29 zur Sekundärwicklung 31 eingestellt werden und die Frequenz der Spannung Uₚᵣᵢₘ kann durch eine entsprechende Ansteuerung der einzelnen Thyristoren der Schalteinrichtungen 23 eingestellt werden.

## Patentansprüche

1. Elektrische Schaltung insbesondere zur Erzeugung elektrischer Energie, mit einem n-phasigen Generator (12) und einem Umrichter (13), wobei der Umrichter (13) m Teil-Umrichter (171, 172, 173) aufweist, wobei jeder der Teil-Umrichter (171, 172, 173) p Blöcke (161, ..., 169) aufweist, wobei jeder der Blöcke n/m Schalteinrichtungen (23) aufweist, und wobei die Schalteinrichtungen (23) der einzelnen Blöcke (161, ..., 169) symmetrisch mit dem Generator (12) verbunden sind, **dadurch gekennzeichnet, dass** die Wicklungen des Generators (12) m Serienschaltungen (33, 34, 35) bilden, die zueinander parallel geschaltet sind, und dass ein Transformator (14), der eine Primärwicklung (29) und eine einzige Sekundärwicklung (31) aufweist, mit der Sekundärwicklung an den Umrichter angeschlossen ist, und dass an den Transformator eine p-phasige Last angeschlossen ist.

2. Elektrische Schaltung nach Anspruch 1, wobei die Schalteinrichtungen (23) jedes Blocks (161, ..., 169) mit jeder p-ten Phase des Generators (12) verbunden sind.

3. Elektrische Schaltung nach Anspruch 1 oder 2, wobei die Schalteinrichtungen (23) der aufeinanderfolgenden Blöcke (161, ..., 169) mit um eine Phase unterschiedlichen Phasen des Generators (12) verbunden sind.

4. Elektrische Schaltung nach einem der vorstehenden Ansprüche, wobei jede der Schalteinrichtungen (23) zwei gegensinnig parallel geschaltete Thyristoren aufweist.

5. Elektrische Schaltung nach Anspruch 4, wobei jede der Schalteinrichtungen (23) zwei Reihenschaltungen von gegensinnig parallel geschalteten Thyristoren aufweist.

6. Elektrische Schaltung nach einem der vorstehenden Ansprüche, wobei die Anzahl m der Teil-Umrichter (171, 172, 173) ein ganzzahliger Teiler der Anzahl n der Phasen des Generators (12) ist.

7. Elektrische Schaltung (Fig. 3) nach einem der vorstehenden Ansprüche, wobei die Schalteinrichtungen (23) jedes Blocks (161, ..., 169) ausgangsseitig zusammengeschaltet sind, und wobei alle Blöcke (161, ..., 169) der Teil-Umrichter (171, 172, 173) mit der Sekundärwicklung (31) verbunden sind.

8. Elektrische Schaltung nach einem der vorstehenden Ansprüche, wobei an die Primärwicklung (29) ein p-phasiges Energieversorgungsnetz angeschlossen ist.

9. Elektrische Schaltung nach einem der vorstehenden Ansprüche, wobei der Generator (12) mechanisch mit einer Turbine (11) gekoppelt ist.

## Claims

1. Electrical circuit, in particular for generating electrical energy, with an n-phase generator (12) and a converter (13), wherein the converter (13) comprises m partial converters (171, 172, 173), wherein each partial converter (171, 172, 173) comprises p blocks (161, ..., 169), wherein each of the blocks comprises n/m switching devices (23), and wherein the switching devices (23) of the individual blocks (161, ..., 169) are connected symmetrically to the generator (12), **characterised in that** the windings of the generator (12) form m series circuits (33, 34, 35) which are switched in parallel with each other, and that a transformer (14) which has a primary winding (29) and a secondary winding (31) is connected with the secondary winding to the converter, and that a p-phase load is connected to the transformer.

2. Electrical circuit according to claim 1, wherein the switching devices (23) of each block (161, ..., 169) are connected to every p-th phase of the generator (12).

3. Electrical circuit according to claim 1 or 2, wherein the switching devices (23) of successive blocks (161, ...., 169) are connected to phases of the generator (12) which differ by one phase.

4. Electrical circuit according to any of the preceding claims, wherein each of the switching devices (23) comprises two thyristors switched in parallel in opposite directions.

5. Electrical circuit according to claim 4, wherein each of the switching devices (23) comprises two series circuits of thyristors switched in parallel in opposite directions.

6. Electrical circuit according to any of the preceding claims, wherein the number m of partial converters (171, 172, 173) is an integral divisor of the number n of phases of the generator (12).

7. Electrical circuit (Fig. 3) according to any of the preceding claims, wherein the switching devices (23) of each block (161, ... 169) are switched together on the output side, and wherein all blocks (161, ... 169) of the partial converters (171, 172, 173) are connected to the secondary winding (31).

8. Electrical circuit according to any of the preceding claims, wherein a p-phase energy supply network is connected to the primary winding (29).

9. Electrical circuit according to any of the preceding claims, wherein the generator (12) is mechanically coupled to a turbine (11).

## Revendications

1. Circuit électrique, destiné notamment à la production d'énergie électrique, comprenant un générateur (12) à n phases et un convertisseur (13), le convertisseur (13) présentant m sections de convertisseur (171, 172, 173), sachant que chacune des sections de convertisseur (171, 172, 173) présente p blocs (161, ..., 169), chacun des blocs présentant n/m dispositifs de couplage (23), et les dispositifs de couplage (23) des différents blocs (161, ..., 169) étant reliés de façon symétrique au générateur (12), **caractérisé en ce que** les enroulements du générateur (12) forment m montages en série (33, 34, 35) qui sont montés en parallèle les uns avec les autres, et **en ce qu'**un transformateur (14), qui présente un enroulement primaire (29) et un enroulement secondaire (31) unique, est connecté au convertisseur par l'enroulement secondaire, et **en ce qu'**une charge à p phases est connectée au transformateur.

2. Circuit électrique selon la revendication 1, dans lequel les dispositifs de couplage (23) de chaque bloc (161, ..., 169) sont reliés à chaque p-ième phase du générateur (12).

3. Circuit électrique selon la revendication 1 ou 2, dans lequel les dispositifs de couplage (23) des blocs (161, ..., 169) successifs sont reliés à des phases du générateur (12) qui diffèrent d'une phase.

4. Circuit électrique selon l'une des revendications précédentes, dans lequel chacun des dispositifs de couplage (23) présente deux thyristors montés en parallèle dans des sens opposés.

5. Circuit électrique selon la revendication 4, dans lequel chacun des dispositifs de couplage (23) présente deux montages en série de thyristors montés en parallèle dans des sens opposés.

6. Circuit électrique selon l'une des revendications précédentes, dans lequel le nombre m des sections de convertisseur (171, 172, 173) est un diviseur entier du nombre n des phases du générateur (12).

7. Circuit électrique (fig. 3) selon l'une des revendications précédentes, dans lequel les dispositifs de couplage (23) de chaque bloc (161, ..., 169) sont connectés entre eux côté sortie, et dans lequel tous les blocs (161, ..., 169) des sections de convertisseur (171, 172, 173) sont reliés à l'enroulement secondaire (31).

8. Circuit électrique selon l'une des revendications précédentes, dans lequel un réseau d'alimentation en énergie à p phases est connecté à l'enroulement primaire (29).

9. Circuit électrique selon l'une des revendications précédentes, dans lequel le générateur (12) est couplé mécaniquement à une turbine (11).
